# EUROPEAN PATENT SPECIFICATION

(11) **EP 2 596 170 B1**
(45) Date of publication and mention of the grant of the patent: **02.05.2018**
(21) Application number: 11735806.9
(22) Date of filing: 22.07.2011
(51) Int. Cl.: D21H 17/09, D21H 21/28, D21H 21/30, D21H 21/32

(54) **METHOD FOR PREPARING WHITE PAPER**
VERFAHREN ZUR HERSTELLUNG VON WEISSEM PAPIER
PROCÉDÉ POUR PRÉPARER DU PAPIER BLANC

(30) Priority: 29.06.2011 EP 11005290; 23.07.2010 EP 10007659
(43) Date of publication of application: 29.05.2013
(73) Proprietor: Archroma IP GmbH, 4153 Reinach (CH)
(72) Inventor: GRETHER-SCHENE, Heidrun, 79588 Efringen-Kirchen (DE); KLEIN, Cédric, 68420 Herrlisheim-près-Colmar (FR); BREVEAUD, Frederic, F-68100 Mulhouse (FR); ATKINSON, David, CH-4144 Arlesheim BL (CH); JACKSON, Andrew, Clive, CH-4142 Münchenstein BL (CH)
(74) Representative: Ricker, Mathias
(86) International application number: PCT/EP2011/003692
(87) International publication number: WO 2012/010326

(56) References cited:
- EP-A1- 0 534 903
- EP-A1- 1 355 004
- WO-A1-02/18705
- WO-A1-2009/118247
- DE-A1- 19 916 078

## Description

The instant invention relates to a method for preparing white paper which comprises adding to the pulp mass an aqueous formulation consisting essentially of derivatives of diaminostilbene optical brighteners, shading dyes, optionally auxiliaries, and water.

### Background of the Invention

It is well known that the whiteness and thereby the attractiveness of papers can be improved by the addition of optical brighteners and shading dyes to the pulp mass prior to sheet formation.

However, the decrease of the brightness while using shading dyes is a widely known problem.

WO 0218705 A1 however teaches that the use of shading dyes, while having a positive effect on whiteness, has a negative impact on brightness. The solution to this problem is to add additional optical brightener, the advantage claimed in WO 0218705 A1 being characterized by the use of a mixture comprising at least one direct dye (exemplified by C.I. Direct Violet 35) and at least one optical brightener.

Surprisingly, we have now discovered certain shading dyes which have a strongly positive effect on whiteness while having little or no effect on brightness, and which can be used in aqueous formulations comprising optical brighteners, optionally auxiliaries, and water in order to enable the papermaker to reach high levels of whiteness and brightness.

Therefore, the goal of the present invention is to provide a method for preparing white paper which comprises adding to the pulp mass an aqueous formulation containing derivatives of diaminostilbene optical brighteners, certain shading dyes, optionally auxiliaries, and water. The paper prepared according to the present invention affords enhanced high whiteness levels while avoiding the disadvantages characterized by the use of shading dyes (loss of brightness) or pigments (lower whiteness build) recognized as being state-of-the-art.

### Description of the Invention

The present invention therefore provides a method for preparing white paper which comprises adding to the pulp mass an aqueous formulation comprising
(a) at least one optical brightener of formula (I) 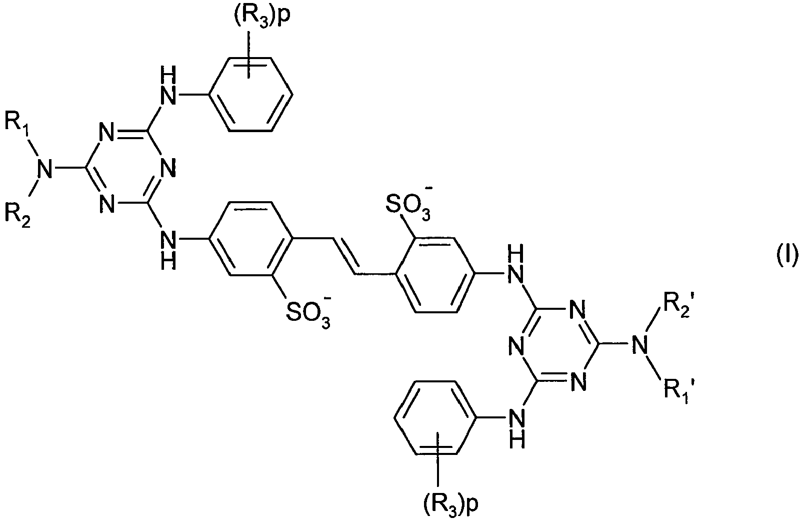 in which
   the anionic charge on the brightener is balanced by a cationic charge composed of one or more identical or different cations selected from the group consisting of hydrogen, an alkali metal cation, alkaline earth metal, ammonium, ammonium which is mono-, di-, tri- or tetrasubstituted by a C₁-C₄ linear or branched alkyl radical, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
   - R₁ and R₁^{'}: may be the same or different, and each is hydrogen, C₁-C₄ linear or branched alkyl, C₂-C₄ linear or branched hydroxyalkyl, CH₂CO₂⁻, CH₂CH₂CONH₂ or CH₂CH₂CN,
   - R₂ and R₂^{'}: may be the same or different, and each is C₁-C₄ linear or branched alkyl, C₂-C₄ linear or branched hydroxyalkyl, CH₂CO₂⁻,
   CH(CO₂⁻)CH₂CO₂⁻, CH(CO₂⁻)CH₂CH₂CO₂⁻, CH₂CH₂SO₃⁻, CH₂CH₂CO₂⁻, CH₂CH(CH₃)CO₂⁻, benzyl, or
   - R₁ and R₂: and/or R₁^{'} and R₂^{'}, together with the neighboring nitrogen atom signify a morpholine ring
   - R₃: signify hydrogen, -CO₂⁻ or -SO₃⁻ and
   - p: is 0, 1 or 2,
(b) at least one shading dye of formula (II) 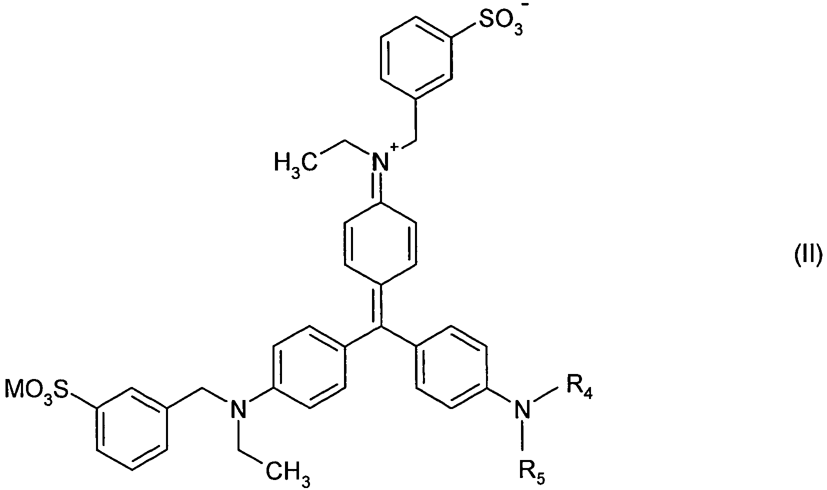 in which
   - R₄: signifies H, methyl or ethyl,
   - R₅: signifies paramethoxyphenyl, methyl or ethyl,
   - M: signifies a cation selected from the group consisting of hydrogen, an alkali metal cation, alkaline earth metal, ammonium, ammonium which is mono-, di-, tri- or tetrasubstituted by a C₁-C₄ linear or branched alkyl radical, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
(c) optionally one or more auxiliaries and
(d) water.

In compounds of formula (I) in which R₃ is -SO₃⁻ and p is 1, the -SO₃⁻ group is preferably in the 4-position of the phenyl ring.
In compounds of formula (I) in which R₃ is -SO₃⁻ and p is 2, the -SO₃⁻ groups are preferably in the 2,5-positions of the phenyl ring.
In compounds of formula (I) in which R₃ is -CO₂⁻ and p is 1, the -CO₂⁻ group is preferably in the 2 or 4 position of the phenyl ring.

Preferred compounds of formula (I) are those in which the anionic charge on the brightener is balanced by a cationic charge composed of one or more identical or different cations selected from the group consisting of hydrogen, an alkali metal cation, alkaline earth metal, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
- R₁ and R₁^{'}: may be the same or different, and each is hydrogen, C₁-C₄ linear or branched alkyl, C₂-C₄ linear or branched hydroxyalkyl, CH₂CO₂⁻, CH₂CH₂CONH₂ or CH₂CH₂CN,
- R₂ and R₂^{'}: may be the same or different, and each is C₁-C₄ linear or branched alkyl, C₂-C₄ linear or branched hydroxyalkyl, CH₂CO₂⁻, CH(CO₂⁻)CH₂CO₂⁻ or CH₂CH₂SO₃⁻,
- R₃: signify hydrogen, -CO₂⁻ or -SO₃⁻ and
- p: is 0, 1 or 2.

More preferred compounds of formula (I) are those in which
the anionic charge on the brightener is balanced by a cationic charge composed of one or more identical or different cations selected from the group consisting of Li⁺, Na⁺, K⁺, Ca²⁺, Mg²⁺, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
- R₁ and R₁^{'}: may be the same or different, and each is hydrogen, methyl, ethyl, propyl, α-methylpropyl, β-methylpropyl, β-hydroxyethyl, β-hydroxypropyl, CH₂CO₂⁻, CH₂CH₂CONH₂ or CH₂CH₂CN,
- R₂ and R₂^{'}: may be the same or different, and each is methyl, ethyl, propyl, α-methylpropyl, β-methylpropyl, β-hydroxyethyl, β-hydroxypropyl, CH₂CO₂⁻, CH(CO₂⁻)CH₂CO₂⁻ or CH₂CH₂SO₃⁻,
- R₃: signify hydrogen, -CO₂⁻ or -SO₃⁻ and
- p: is 0, 1 or 2.

Especially preferred compounds of formula (I) are those in which
the anionic charge on the brightener is balanced by a cationic charge composed of one or more identical or different cations selected from the group consisting of Na⁺, K⁺, triethanolammonium, N-hydroxyethyl-N,N-dimethylammonium, N-hydroxyethyl-N,N-diethylammonium or mixtures of said compounds,
- R₁ and R₁^{'}: may be the same or different, and each is hydrogen, ethyl, propyl, β-hydroxyethyl, β-hydroxypropyl, CH₂CO₂⁻, or CH₂CH₂CONH₂,
- R₂ and R₂^{'}: may be the same or different, and each is ethyl, propyl, β-hydroxyethyl, β-hydroxypropyl, CH₂CO₂⁻, CH(CO₂⁻)CH₂CO₂⁻ or CH₂CH₂SO₃⁻ and
- R₃: signify hydrogen, -CO₂⁻ or -SO₃⁻ and
- p: is 0 or 1.

Compound of formula (I) is used in an amount typically of from 0.001 to 5 % by weight, preferably in the range of from 0.01 to 3 % by weight, the % by weight being based on the total weight of dry pulp.

Preferred compounds of formula (II) are those in which
- R₄: signifies H, methyl or ethyl,
- R₅: signifies paramethoxyphenyl, methyl or ethyl,
- M: signifies a cation selected from the group consisting of hydrogen, an alkali metal cation, alkaline earth metal, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds.

More preferred compounds of formula (II) are those in which
- R₄: signifies methyl or ethyl,
- R₅: signifies methyl or ethyl,
- M: signifies a cation selected from the group consisting of Li⁺, Na⁺, K⁺, ½ Ca²⁺, ½ Mg²⁺, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds.

Especially preferred compounds of formula (II) are those in which
- R₄: signifies methyl or ethyl,
- R₅: signifies methyl or ethyl,
- M: signifies a cation selected from the group consisting of Na⁺, K⁺, triethanolammonium, N-hydroxyethyl-N,N-dimethylammonium, N-hydroxyethyl-N,N-diethylammonium or mixtures of said compounds.

Compound of formula (II) is used in an amount typically of from 0.0001 to 0.02 % by weight, preferably in the range of from 0.0005 to 0.01 % by weight, the % by weight being based on the total weight of dry pulp.

The fibres in the pulp mass may be sourced from hardwood and/or softwood trees, and may comprise virgin fibres and/or recycled fibres. The fibres may be bleached or unbleached.

In addition to one or more compounds of formula (I), one or more compounds of formula (II) and water, the aqueous formulation may optionally contain one or more auxiliaries. Examples of such auxiliaries are for example antifreezers, dispersing agents, synthetic or natural thickeners, carriers, defoamers, wax emulsions, dyes, inorganic salts, solubilizing aids, preservatives, complexing agents, biocides, cross-linkers, pigments, special resins etc.

In addition to one or more compounds of formula (I), one or more compounds of formula (II), optionally one or more auxiliaries and water, the aqueous formulation may contain by-products formed during the preparation of compounds of formula (I) and compounds of formula (II).

The aqueous formulation may be prepared by mixing one or more compounds of formula (I), one or more compounds of formula (II) and optionally one or more auxiliaries as solids or as preformed aqueous solutions.

One or more compounds of formula (I), one or more compounds of formula (II), optionally one or more auxiliaries and water can be mixed in any order or at the same time to form the aqueous formulation.

Preferably, one or more compounds of formula (II), optionally one or more auxiliaries and water are added to a preformed aqueous solution containing one or more compounds of formula (I) to form the aqueous formulation.

When used as a preformed aqueous solution, the concentration of compound of formula (I) in water is preferably of from 1 to 50 % by weight, more preferably of from 2 to 40 % by weight, even more preferably from 10 to 30 % by weight, the % by weight being based on the total weight of the preformed aqueous solution containing the compound of formula (I).

When used as a preformed aqueous solution, the concentration of compound of formula (II) in water is preferably of from 0.001 to 30 % by weight, more preferably of from 0.01 to 25 % by weight, even more preferably from 0.02 to 20 % by weight, the % by weight being based on the total weight of the preformed aqueous solution containing the compound of formula (II).

The pH value of the aqueous formulation is typically in the range of from 5 to 13, preferably of from 6 to 11, more preferably of from 7 to 10. Where it is necessary to adjust the pH of the aqueous formulation, acids or bases may be employed. Examples of acids which may be employed include but are not restricted to hydrochloric acid, sulphuric acid, formic acid and acetic acid. Examples of bases which may be employed include but are not restricted to alkali metal and alkaline earth metal hydroxide or carbonates, ammonia or amines.

The present invention further provides a method for preparing white paper characterized in that the aqueous formulation containing one or more compounds of formula (I), one or more compounds of formula (II), optionally one or more auxiliaries and water is used.

The present invention therefore provides a method for preparing white paper characterized in that the aqueous formulation containing one or more compounds of formula (I), one or more compounds of formula (II), optionally one or more auxiliaries and water is added to the pulp mass prior to sheet formation.

The following examples shall demonstrate the instant invention in more details. In the present application, if not indicated otherwise, "parts" means "parts by weight" and "%" means "% by weight".

### Examples

### Preparative Example 1

An aqueous solution (S1) is prepared by slowly adding 79 parts of water to 921 parts of a preformed aqueous solution containing 0.216 mol per kg of compound of formula (1) (synthesized according to example 1 in GB 1114021 with the sole difference that the final solution was ultra-filtered to remove salts and concentrated to 0.216 mol per kg of compound of formula (1)) at room temperature with efficient stirring. The obtained mixture is stirred for 1 hour at room temperature to afford 1000 parts of an aqueous solution (S1) containing 0.199 mol per kg of compound of formula (1). The resulting aqueous solution (S1) has a pH in the range of from 8.0 to 9.0.

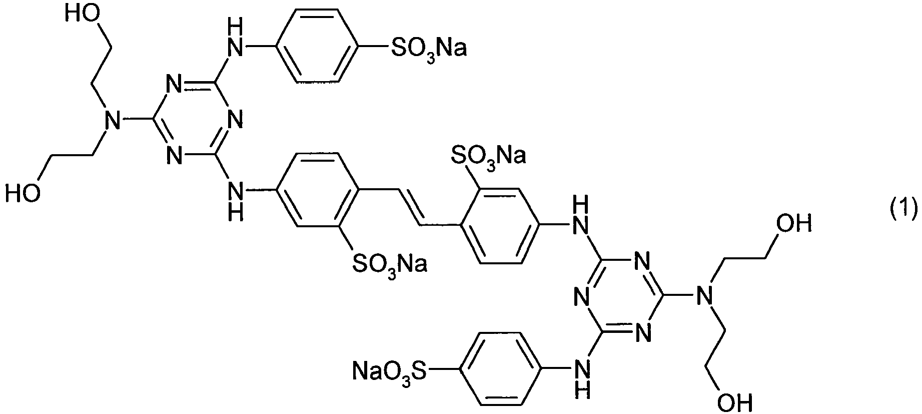

### Preparative Example 1a

An aqueous formulation (F1a) is prepared by slowly adding 2 parts of compound of formula (a) and 77 parts of water to 921 parts of a preformed aqueous solution containing 0.216 mol per kg of compound of formula (1) (synthesized according to example 1 in GB 1114021 with the sole difference that the final solution was ultra-filtered to remove salts and concentrated to 0.216 mol per kg of compound of formula (1)) at room temperature with efficient stirring. The obtained mixture is stirred for 1 hour at room temperature to afford 1000 parts of an aqueous formulation (F1a) containing compound of formula (a) at a concentration of 0.2 weight %, the weight % being based on the total weight of the final aqueous formulation (F1a) and 0.199 mol per kg of compound of formula (1). The resulting aqueous formulation (F1a) has a pH in the range of from 8.0 to 9.0.

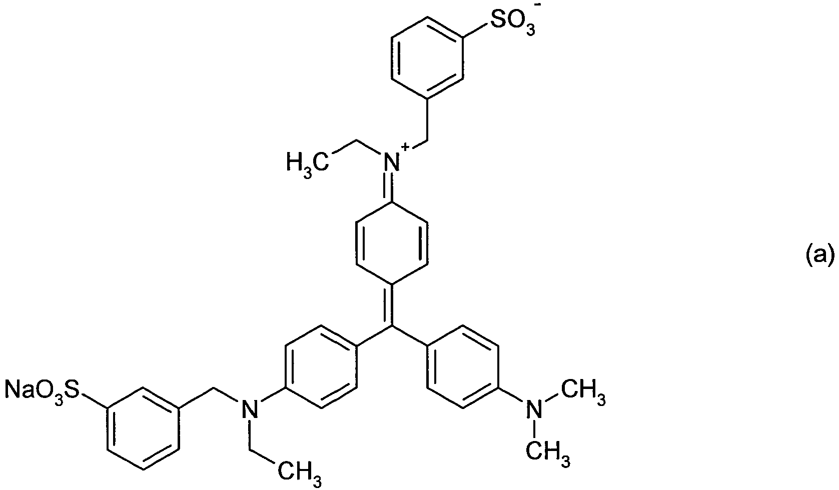

### Preparative Example 1b

An aqueous formulation (F1b) is prepared by slowly adding 2 parts of compound of formula (b) and 77 parts of water to 921 parts of a preformed aqueous solution containing 0.216 mol per kg of compound of formula (1) (synthesized according to example 1 in GB 1114021 with the sole difference that the final solution was ultra-filtered to remove salts and concentrated to 0.216 mol per kg of compound of formula (1)) at room temperature with efficient stirring. The obtained mixture is stirred for 1 hour at room temperature to afford 1000 parts of an aqueous formulation (F1b) containing compound of formula (b) at a concentration of 0.2 weight %, the weight % being based on the total weight of the final aqueous formulation (F1b) and 0.199 mol per kg of compound of formula (1). The resulting aqueous formulation (F1b) has a pH in the range of from 8.0 to 9.0.

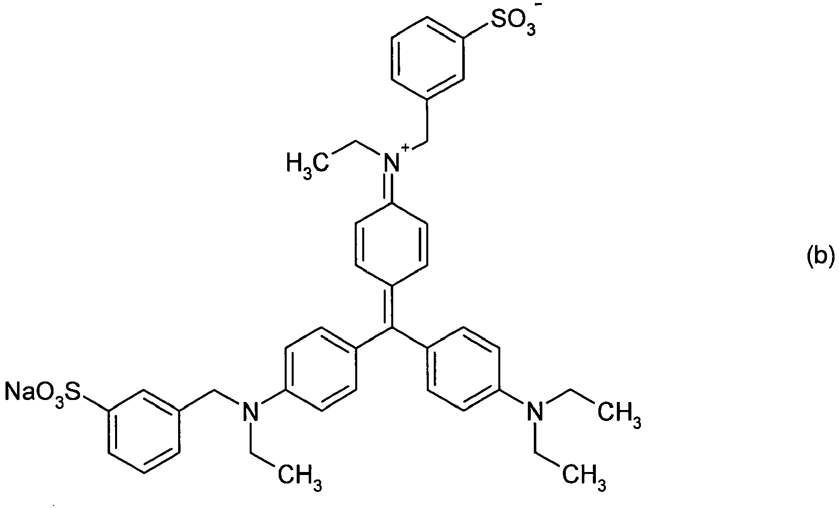

### Comparative Example 1c

An aqueous formulation (F1c) is prepared by slowly adding 18.2 parts of a preformed aqueous solution containing 11 weight % of C.I. Direct Violet 35, the weight % being based on the total weight of the aqueous C.I. Direct Violet 35 preformed solution and 60.8 parts of water to 921 parts of a preformed aqueous solution containing 0.216 mol per kg of compound of formula (1) (synthesized according to example 1 in GB 1114021 with the sole difference that the final solution was ultra-filtered to remove salts and concentrated to 0.216 mol per kg of compound of formula (1)) at room temperature with efficient stirring. The obtained mixture is stirred for 1 hour at room temperature to afford 1000 parts of an aqueous formulation (F1c) containing C.I. Direct Violet 35 at a concentration of 0.2 weight %, the weight % being based on the total weight of the final aqueous formulation (F1c) and 0.199 mol per kg of compound of formula (1). The resulting aqueous formulation (F1c) has a pH in the range of from 8.0 to 9.0.

### Preparative Example 2

An aqueous solution (S2) is prepared by slowly adding 26 parts of water and 150 parts of urea to 824 parts of a preformed aqueous mixture containing 0.250 mol per kg of compound of formula (2), synthesized according to example 1 in EP 0884312-A1, at room temperature with efficient stirring. The obtained mixture is stirred for 1 hour at room temperature to afford 1000 parts of an aqueous solution (S2) containing 0.206 mol per kg of compound of formula (2). The resulting aqueous solution (S2) has a pH in the range of from 8.0 to 9.0.

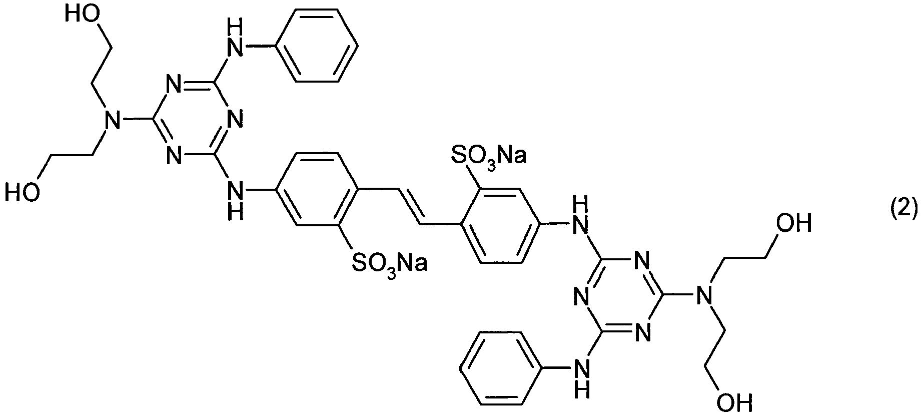

### Preparative Example 2a

An aqueous formulation (F2a) is prepared by slowly adding 2 parts of compound of formula (a), 150 parts of urea and 24 parts of water to 824 parts of a preformed aqueous mixture containing 0.250 mol per kg of compound of formula (2) at room temperature with efficient stirring. The obtained mixture is stirred for 1 hour at room temperature to afford 1000 parts of an aqueous formulation (F2a) containing compound of formula (a) at a concentration of 0.2 weight %, the weight % being based on the total weight of the final aqueous formulation (F2a) and 0.206 mol per kg of compound of formula (2). The resulting aqueous formulation (F2a) has a pH in the range of from 8.0 to 9.0.

### Preparative Example 2b

An aqueous formulation (F2b) is prepared by slowly adding 2 parts of compound of formula (b), 150 parts of urea and 24 parts of water to 824 parts of a preformed aqueous mixture containing 0.250 mol per kg of compound of formula (2) at room temperature with efficient stirring. The obtained mixture is stirred for 1 hour at room temperature to afford 1000 parts of an aqueous formulation (F2b) containing compound of formula (b) at a concentration of 0.2 weight %, the weight % being based on the total weight of the final aqueous formulation (F2b) and 0.206 mol per kg of compound of formula (2). The resulting aqueous formulation (F2b) has a pH in the range of from 8.0 to 9.0.

### Comparative Example 2c

An aqueous formulation (F2c) is prepared by slowly adding 18.2 parts of a preformed aqueous solution containing 11 weight % of C.I. Direct Violet 35, the weight % being based on the total weight of the aqueous C.I. Direct Violet 35 preformed solution, 150 parts of urea and 7.8 parts of water to 824 parts of a preformed aqueous mixture containing 0.250 mol per kg of compound of formula (2) at room temperature with efficient stirring. The obtained mixture is stirred for 1 hour at room temperature to afford 1000 parts of an aqueous formulation (F2c) containing C.I. Direct Violet 35 at a concentration of 0.2 weight %, the weight % being based on the total weight of the final aqueous formulation (F2c) and 0.206 mol per kg of compound of formula (2). The resulting aqueous formulation (F2c) has a pH in the range of from 8.0 to 9.0.

### Preparative Example 3

An aqueous solution (S3) is prepared by slowly adding 181 parts of water to 819 parts of a preformed aqueous mixture containing 0.238 mol per kg of compound of formula (3), synthesized according to example 1 in WO 2007/017336-A1, at room temperature with efficient stirring. The obtained mixture is stirred for 1 hour at room temperature to afford 1000 parts of an aqueous solution (S3) containing 0.195 mol per kg of compound of formula (3). The resulting aqueous solution (S3) has a pH in the range of from 8.0 to 9.0.

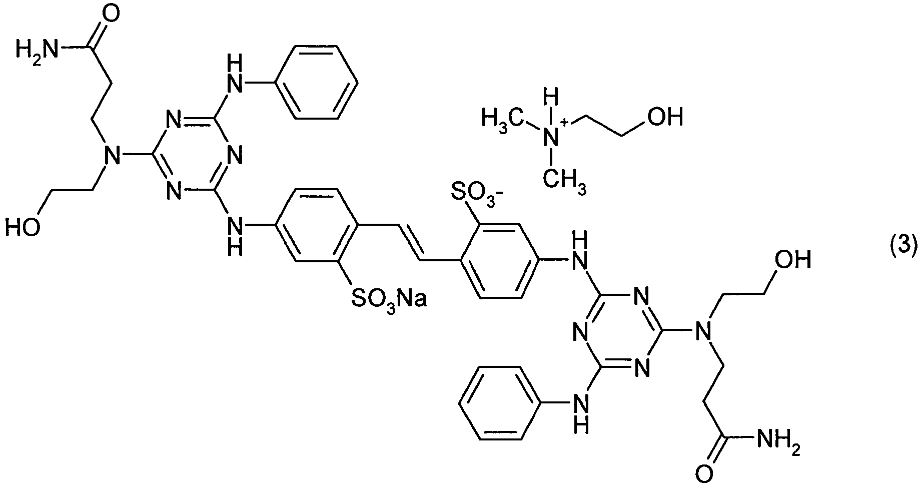

### Preparative Example 3a

An aqueous formulation (F3a) is prepared by slowly adding 2 parts of compound of formula (a) and 179 parts of water to 819 parts of a preformed aqueous mixture containing 0.238 mol per kg of compound of formula (3) at room temperature with efficient stirring. The obtained mixture is stirred for 1 hour at room temperature to afford 1000 parts of an aqueous formulation (F3a) containing compound of formula (a) at a concentration of 0.2 weight %, the weight % being based on the total weight of the final aqueous formulation (F3a) and 0.195 mol per kg of compound of formula (3). The resulting aqueous formulation (F3a) has a pH in the range of from 8.0 to 9.0.

### Preparative Example 3b

An aqueous formulation (F3b) is prepared by slowly adding 2 parts of compound of formula (b) and 179 parts of water to 819 parts of a preformed aqueous mixture containing 0.238 mol per kg of compound of formula (3) at room temperature with efficient stirring. The obtained mixture is stirred for 1 hour at room temperature to afford 1000 parts of an aqueous formulation (F3b) containing compound of formula (b) at a concentration of 0.2 weight %, the weight % being based on the total weight of the final aqueous formulation (F3b) and 0.195 mol per kg of compound of formula (3). The resulting aqueous formulation (F3b) has a pH in the range of from 8.0 to 9.0.

### Comparative Example 3c

An aqueous formulation (F3c) is prepared by slowly adding 18.2 parts of a preformed aqueous solution containing 11 weight % of C.I. Direct Violet 35, the weight % being based on the total weight of the aqueous C.I. Direct Violet 35 preformed solution and 162.8 parts of water to 819 parts of a preformed aqueous mixture containing 0.238 mol per kg of compound of formula (3) at room temperature with efficient stirring. The obtained mixture is stirred for 1 hour at room temperature to afford 1000 parts of an aqueous formulation (F3c) containing C.I. Direct Violet 35 at a concentration of 0.2 weight %, the weight % being based on the total weight of the final aqueous formulation (F3c) and 0.195 mol per kg of compound of formula (3). The resulting aqueous formulation (F3c) has a pH in the range of from 8.0 to 9.0.

### Preparative Example 4

An aqueous solution (S4) is prepared by slowly adding 157 parts of water to 843 parts of a preformed aqueous mixture containing 0.210 mol per kg of compound of formula (4) (synthesized according to example 1 in WO 2011/033064-A2 with the sole difference that the final solution was ultra-filtered to remove salts and concentrated to 0.210 mol per kg of compound of formula (4)) at room temperature with efficient stirring. The obtained mixture is stirred for 1 hour at room temperature to afford 1000 parts of an aqueous solution (S4) containing 0.177 mol per kg of compound of formula (4). The resulting aqueous solution (S4) has a pH in the range of from 8.0 to 9.0.

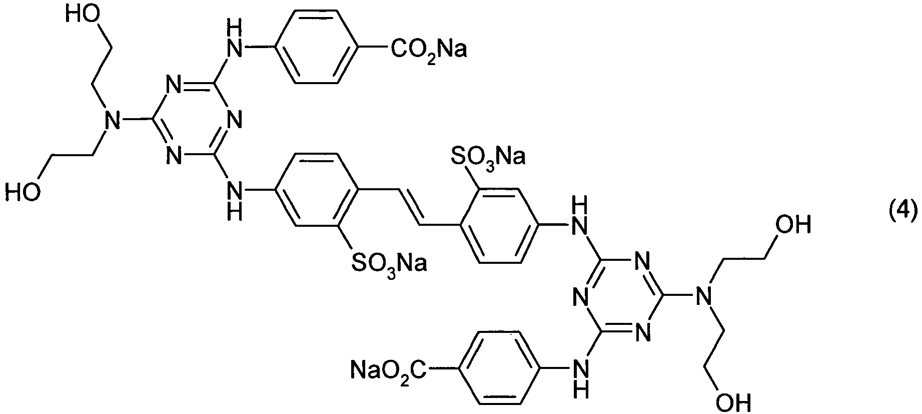

### Preparative Example 4a

An aqueous formulation (F4a) is prepared by slowly adding 2 parts of compound of formula (a) and 155 parts of water to 843 parts of a preformed aqueous mixture containing 0.210 mol per kg of compound of formula (4) (synthesized according to example 1 in WO 2011/033064-A2 with the sole difference that the final solution was ultra-filtered to remove salts and concentrated to 0.210 mol per kg of compound of formula (4)) at room temperature with efficient stirring. The obtained mixture is stirred for 1 hour at room temperature to afford 1000 parts of an aqueous formulation (F4a) containing compound of formula (a) at a concentration of 0.2 weight %, the weight % being based on the total weight of the final aqueous formulation (F4a) and 0.177 mol per kg of compound of formula (4). The resulting aqueous formulation (F4a) has a pH in the range of from 8.0 to 9.0.

### Preparative Example 4b

An aqueous formulation (F4b) is prepared by slowly adding 2 parts of compound of formula (b) and 155 parts of water to 843 parts of a preformed aqueous mixture containing 0.210 mol per kg of compound of formula (4) (synthesized according to example 1 in WO 2011/033064-A2 with the sole difference that the final solution was ultra-filtered to remove salts and concentrated to 0.210 mol per kg of compound of formula (4)) at room temperature with efficient stirring. The obtained mixture is stirred for 1 hour at room temperature to afford 1000 parts of an aqueous formulation (F4b) containing compound of formula (b) at a concentration of 0.2 weight %, the weight % being based on the total weight of the final aqueous formulation (F4b) and 0.177 mol per kg of compound of formula (4). The resulting aqueous formulation (F4b) has a pH in the range of from 8.0 to 9.0.

### Comparative Example 4c

An aqueous formulation (F4c) is prepared by slowly adding 18.2 parts of a preformed aqueous solution containing 11 weight % of C.I. Direct Violet 35, the weight % being based on the total weight of the aqueous C.I. Direct Violet 35 preformed solution and 138.8 parts of water to 843 parts of a preformed aqueous mixture containing 0.210 mol per kg of compound of formula (4) (synthesized according to example 1 in WO 2011/033064-A2 with the sole difference that the final solution was ultra-filtered to remove salts and concentrated to 0.210 mol per kg of compound of formula (4)) at room temperature with efficient stirring. The obtained mixture is stirred for 1 hour at room temperature to afford 1000 parts of an aqueous formulation (F4c) containing C.I. Direct Violet 35 at a concentration of 0.2 weight %, the weight % being based on the total weight of the final aqueous formulation (F4c) and 0.177 mol per kg of compound of formula (4). The resulting aqueous formulation (F4c) has a pH in the range of from 8.0 to 9.0.

### Application Example 1

The solution (S1) and the formulations (F1a), (F1b) and (F1c) prepared according to preparative Example 1, 1a, 1b and comparative example 1c respectively are added at a range of concentrations from 0 to 2 weight %, the weight % being based on the total weight of dry fibre to 200 parts of a 2.5% aqueous suspension of a 50:50 mixture of bleached spruce sulphite cellulose and bleached beech sulphite cellulose beaten to a Schopper Riegler wetness of 20°SR. The suspensions are stirred for 5 minutes, then diluted to 1000 parts. A paper sheet is then made by drawing the suspension through a wire mesh. After being pressed and dried, the paper is measured for whiteness and brightness on a calibrated Minolta spectrophotometer.

Results are depicted in table 1a and 1b respectively and clearly shows the significant improvement in whiteness while avoiding the disadvantages characterized by the use of shading dyes (loss of brightness).

**Table 1a**

| Conc. % | CIE Whiteness | | |
|---|---|---|---|
| | Solution (S1) from preparative example 1 | Formulation (F1a) from preparative example 1a | Formulation (F1b) from preparative example 1b |
| 0.0 | 64.1 | 64.1 | 64.1 |
| 0.4 | 109.7 | 114.9 | 113.5 |
| 0.8 | 119.6 | 124.2 | 123.9 |
| 1.2 | 124.2 | 131.3 | 129.5 |
| 1.6 | 126.8 | 134.1 | 133.1 |
| 2.0 | 125.7 | 136.6 | 135.5 |

**Table 1b**

| Conc. % | Brightness | | | |
|---|---|---|---|---|
| | Solution (S1) from preparative example 1 | Formulation (F1a) from preparative example 1a | Formulation (F1b) from preparative example 1b | Formulation (F1c) from comparative example 1c |
| 0.0 | 84.4 | 84.4 | 84.4 | 84.4 |
| 0.4 | 100.3 | 101.3 | 101.0 | 98.5 |
| 0.8 | 104.6 | 104.4 | 104.7 | 99.7 |
| 1.2 | 107.0 | 106.8 | 106.9 | 100.3 |
| 1.6 | 108.5 | 107.8 | 107.8 | 99.5 |
| 2.0 | 108.6 | 108.3 | 108.9 | 98.8 |

### Application Example 2

The solution (S2) and the formulations (F2a), (F2b) and (F2c) prepared according to preparative Example 2, 2a, 2b and comparative example 2c respectively are added at a range of concentrations from 0 to 2 weight %, the weight % being based on the total weight of dry fibre to 200 parts of a 2.5% aqueous suspension of a 50:50 mixture of bleached spruce sulphite cellulose and bleached beech sulphite cellulose beaten to a Schopper Riegler wetness of 20°SR. The suspensions are stirred for 5 minutes, then diluted to 1000 parts. A paper sheet is then made by drawing the suspension through a wire mesh. After being pressed and dried, the paper is measured for whiteness on a calibrated Minolta spectrophotometer.

Results are depicted in table 2a and 2b respectively and clearly shows the significant improvement in whiteness while avoiding the disadvantages characterized by the use of shading dyes (loss of brightness).

**Table 2a**

| Conc. % | CIE Whiteness | | |
|---|---|---|---|
| | Solution (S2) from preparative example 2 | Formulation (F2a) from preparative example 2a | Formulation (F2b) from preparative example 2b |
| 0.0 | 64.1 | 64.1 | 64.1 |
| 0.4 | 112.5 | 116.8 | 115.4 |
| 0.8 | 120.3 | 124.4 | 123.9 |
| 1.2 | 125.2 | 128.7 | 128.7 |
| 1.6 | 126.0 | 131.3 | 131.7 |
| 2.0 | 127.7 | 133.4 | 132.9 |

**Table 2b**

| Conc. % | Brightness | | | |
|---|---|---|---|---|
| | Solution (S2) from preparative example 2 | Formulation (F2a) from preparative example 2a | Formulation (F2b) from preparative example 2b | Formulation (F2c) from comparative example 2c |
| 0.0 | 84.4 | 84.4 | 84.4 | 84.4 |
| 0.4 | 101.5 | 102.6 | 102.0 | 100.1 |
| 0.8 | 105.0 | 105.3 | 105.0 | 101.2 |
| 1.2 | 107.5 | 106.8 | 106.7 | 101.0 |
| 1.6 | 108.2 | 107.7 | 107.9 | 100.7 |
| 2.0 | 109.3 | 108.2 | 108.1 | 99.6 |

### Application Example 3

The solution (S3) and the formulations (F3a), (F3b) and (F3c) prepared according to preparative Example 3, 3a, 3b and comparative example 3c respectively are added at a range of concentrations from 0 to 2 weight %, the weight % being based on the total weight of dry fibre to 200 parts of a 2.5% aqueous suspension of a 50:50 mixture of bleached spruce sulphite cellulose and bleached beech sulphite cellulose beaten to a Schopper Riegler wetness of 20°SR. The suspensions are stirred for 5 minutes, then diluted to 1000 parts. A paper sheet is then made by drawing the suspension through a wire mesh. After being pressed and dried, the paper is measured for whiteness on a calibrated Minolta spectrophotometer.

Results are depicted in table 3a and 3b respectively and clearly shows the significant improvement in whiteness while avoiding the disadvantages characterized by the use of shading dyes (loss of brightness).

**Table 3a**

| Conc. % | CIE Whiteness | | |
|---|---|---|---|
| | Solution (S3) rom preparative example 3 | Formulation (F3a) rom preparative example 3a | Formulation (F3b) rom preparative example 3b |
| 0.0 | 64.1 | 64.1 | 64.1 |
| 0.4 | 112.3 | 116.4 | 116.1 |
| 0.8 | 119.7 | 126.6 | 125.6 |
| 1.2 | 123.9 | 132.0 | 130.7 |
| 1.6 | 126.1 | 135.1 | 134.2 |
| 2.0 | 126.1 | 138.4 | 135.3 |

**Table 3b**

| Conc. % | Brightness | | | |
|---|---|---|---|---|
| | Solution (S3) from preparative example 3 | Formulation (F3a) from preparative example 3a | Formulation (F3b) from preparative example 3b | Formulation (F3c) from comparative example 3c |
| 0.0 | 84.4 | 84.4 | 84.4 | 84.4 |
| 0.4 | 101.4 | 101.9 | 102.0 | 99.4 |
| 0.8 | 104.7 | 105.6 | 105.1 | 100.0 |
| 1.2 | 106.9 | 107.3 | 106.9 | 100.5 |
| 1.6 | 108.4 | 108.1 | 107.9 | 99.3 |
| 2.0 | 108.7 | 108.8 | 107.8 | 98.3 |

### Application Example 4

The solution (S4) and the formulations (F4a), (F4b) and (F4c) prepared according to preparative Example 4, 4a, 4b and comparative example 4c respectively are added at a range of concentrations from 0 to 2 weight %, the weight % being based on the total weight of dry fibre to 200 parts of a 2.5% aqueous suspension of a 50:50 mixture of bleached spruce sulphite cellulose and bleached beech sulphite cellulose beaten to a Schopper Riegler wetness of 20°SR. The suspensions are stirred for 5 minutes, then diluted to 1000 parts. A paper sheet is then made by drawing the suspension through a wire mesh. After being pressed and dried, the paper is measured for whiteness on a calibrated Minolta spectrophotometer.

Results are depicted in table 4a and 4b respectively and clearly shows the significant improvement in whiteness while avoiding the disadvantages characterized by the use of shading dyes (loss of brightness).

**Table 4a**

| Conc. % | CIE Whiteness | | |
|---|---|---|---|
| | Solution (S4) from preparative example 4 | Formulation (F4a) from preparative example 4a | Formulation (F4b) from preparative example 4b |
| 0.0 | 64.1 | 64.1 | 64.1 |
| 0.4 | 109.1 | 116.5 | 114.4 |
| 0.8 | 119.7 | 126.0 | 126.9 |
| 1.2 | 125.0 | 131.6 | 132.3 |
| 1.6 | 125.7 | 132.3 | 133.7 |
| 2.0 | 126.1 | 133.9 | 135.2 |

**Table 4b**

| Conc. % | Brightness | | | |
|---|---|---|---|---|
| | Solution (S4) from preparative example 4 | Formulation (F4a) from preparative example 4a | Formulation (F4b) from preparative example 4b | Formulation (F4c) from comparative example 4c |
| 0.0 | 85.5 | 85.5 | 85.5 | 85.5 |
| 0.4 | 99.9 | 101.9 | 100.8 | 99.5 |
| 0.8 | 104.5 | 105.1 | 105.5 | 100.9 |
| 1.2 | 107.8 | 107.1 | 107.4 | 100.5 |
| 1.6 | 108.6 | 107.3 | 107.8 | 99.5 |
| 2.0 | 109.1 | 107.5 | 108.2 | 99.1 |

## Claims

1. . Method for preparing white paper which comprises adding to the pulp mass an aqueous formulation comprising
a) at least one optical brightener of formula (I) 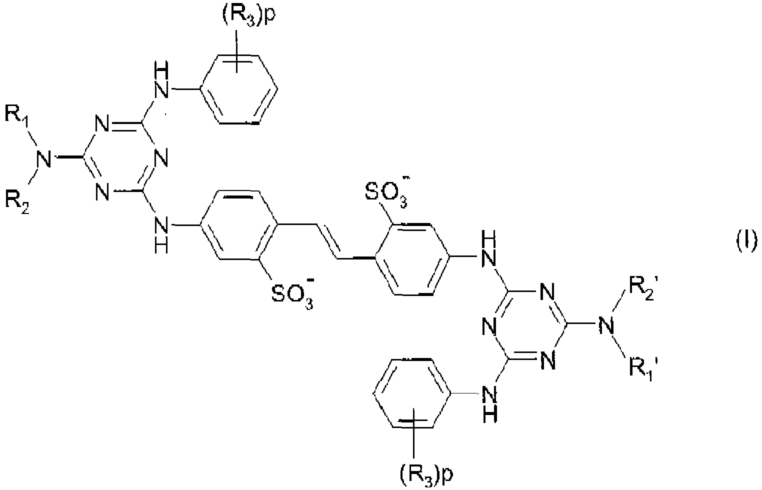 in which
the anionic charge on the brightener is balanced by a cationic charge composed of one or more identical or different cations selected from the group consisting of hydrogen, an alkali metal cation, alkaline earth metal, ammonium, ammonium which is mono-, di-, tri- or tetrasubstituted by a C₁-C₄ linear or branched alkyl radical, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,
and
R₁ and R₁^{'} are the same or different, and each is hydrogen, C₁-C₄ linear or branched alkyl, C₂-C₄ linear or branched hydroxyalkyl, CH₂CO₂⁻, CH₂CH₂CONH₂ or CH₂CH₂CN, and
R₂ and R₂^{'} may be the same or different, and each is C₁-C₄ linear or branched alkyl, C₂-C₄ linear or branched hydroxyalkyl, CH₂CO₂⁻, CH(CO₂⁻)CH₂CO₂⁻ or CH₂CH₂SO₃⁻,
R₃ signifies hydrogen, -CO₂⁻ or -SO₃⁻ and
p is 0, 1 or 2.
b) at least one shading dye of formula (II) 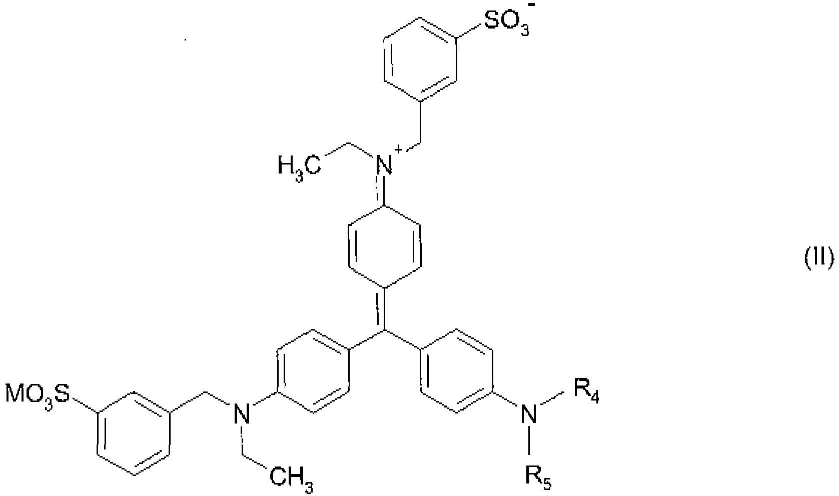 wherein in the
compounds of formula (II)
R₄ signifies H, methyl or ethyl,
R₅ signifies paramethoxyphenyl, methyl or ethyl,
M signifies a cation selected from the group consisting of hydrogen, an alkali metal cation, alkaline earth metal, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds.
c) optionally one or more auxiliaries and
d) water.

2. . Method according to claim 1, wherein in compounds of formula (I) in which R₃ is -SO₃⁻ and p is 1, the -SO₃⁻ group is in the 4-position of the phenyl ring.

3. . Method according to claim 1, wherein in compounds of formula (I) in which R₃ is -SO₃⁻ and p is 2, the -SO₃⁻ groups are in the 2,5-positions of the phenyl ring.

4. . Method according to claim 1, wherein in compounds of formula (I) in which R₃ is -CO₂⁻ and p is 1, the -CO₂⁻ group is in the 2 or 4 position of the phenyl ring.

5. . Method according to at least one of the preceding claims, wherein in compounds of formula (I) the anionic charge on the brightener is balanced by a cationic charge composed of one or more identical or different cations selected from the group consisting of hydrogen, an alkali metal cation, alkaline earth metal, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds,

6. . Method according to at least one of the preceding claims, wherein in compounds of formula (I) the anionic charge on the brightener is balanced by a cationic charge composed of one or more identical or different cations selected from the group consisting of Li⁺, Na⁺, K⁺, Ca²⁺, Mg²⁺, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds.
R₁ and R₁^{'} may be the same or different, and each is hydrogen, methyl, ethyl, propyl, α-methylpropyl, β-methylpropyl, β-hydroxyethyl, β-hydroxypropyl, CH₂CO₂⁻, CH₂CH₂CONH₂ or CH₂CH₂CN,
R₂ and R₂^{'} may be the same or different, and each is methyl, ethyl, propyl, α-methylpropyl, β-methylpropyl, β-hydroxyethyl, β-hydroxypropyl, CH₂CO₂⁻, CH(CO₂⁻)CH₂CO₂⁻ or CH₂CH₂SO₃⁻,
R₃ signify hydrogen, -CO₂⁻ or -SO₃⁻ and
p is 0, 1 or 2.

7. . Method according to at least one of the preceding claims, wherein in compounds of formula (I) the anionic charge on the brightener is balanced by a cationic charge composed of one or more identical or different cations selected from the group consisting of Na⁺, K⁺, triethanolammonium, N-hydroxyethyl-N,N-dimethylammonium, N-hydroxyethyl-N,N-diethylammonium or mixtures of said compounds,
R₁ and R₁^{'} may be the same or different, and each is hydrogen, ethyl, propyl, β-hydroxyethyl, β-hydroxypropyl, CH₂CO₂⁻, or CH₂CH₂CONH₂,
R₂ and R₂^{'} may be the same or different, and each is ethyl, propyl, β-hydroxyethyl, β-hydroxypropyl, CH₂CO₂⁻, CH(CO₂⁻)CH₂CO₂⁻ or CH₂CH₂SO₃⁻ and
R₃ signifies hydrogen, -CO₂⁻ or -SO₃⁻ and
p is 0 or 1.

8. . Method according to at least one of the preceding claims, wherein the compound of formula (I) is used in an amount from 0.001 to 5 % by weight, preferably in the range of from 0.01 to 3 % by weight, the % by weight being based on the total weight of dry pulp.

9. . Method according to at least one of the preceding claims, wherein in compounds of formula (II)
R₄ signifies methyl or ethyl,
R₅ signifies methyl or ethyl,
M signifies a cation selected from the group consisting of Li⁺, Na⁺, K⁺, ½ Ca²⁺, ½ Mg²⁺, ammonium which is mono-, di-, tri- or tetrasubstituted by a C₁-C₄ linear or branched hydroxyalkyl radical, ammonium which is, di-, tri- or tetrasubstituted by a mixture of C₁-C₄ linear or branched alkylradical and linear or branched hydroxyalkyl radical or mixtures of said compounds.

10. . Method according to at least one of the preceding claims, wherein in compounds of formula (II)
R₄ signifies methyl or ethyl,
R₅ signifies methyl or ethyl,
M signifies a cation selected from the group consisting of Na⁺, K⁺, triethanolammonium, N-hydroxyethyl-N,N-dimethylammonium, N-hydroxyethyl-N,N-diethylammonium or mixtures of said compounds.

11. . Method according to at least one of the preceding claims, wherein the compound of formula (II) is used in an amount from 0.0001 to 0.02 % by weight, preferably in the range of from 0.0005 to 0.01 % by weight, the % by weight being based on the total weight of dry pulp.

12. . Method according to at least one of the preceding claims, wherein the aqueous formulation optionally contains one or more auxiliaries, examples of such auxiliaries are for example antifreezers, dispersing agents, synthetic or natural thickeners, carriers, defoamers, wax emulsions, dyes, inorganic salts, solubilizing aids, preservatives, complexing agents, biocides, cross-linkers, pigments or special resins.

13. . Method according to at least one of the preceding claims, wherein the aqueous formulation is prepared by mixing one or more compounds of formula (I), one or more compounds of formula (II) and optionally one or more auxiliaries as solids or as preformed aqueous solutions.

14. . Method according to at least one of the preceding claims, wherein in the aqueous solution, the concentration of compound of formula (I) in water is of from 1 to 50 % by weight the % by weight being based on the total weight of the preformed aqueous solution containing the compound of formula (I).

15. . Method according to at least one of the preceding claims, wherein in the aqueous solution, the concentration of compound of formula (II) in water is preferably of from 0.001 to 30 % by weight, the % by weight being based on the total weight of the preformed aqueous solution containing the compound of formula (II).

16. . Method according to at least one of the preceding claims, wherein the pH value of the aqueous formulation is in the range of from 5 to 13.

## Patentansprüche

1. Verfahren zur Herstellung von weißem Papier, aufweisend das Hinzufügen einer wässrigen Formulierung zur Zellstoffmasse, wobei die wässrige Formulierung aufweist:
a) mindestens einen optischen Aufheller der Formel (I) 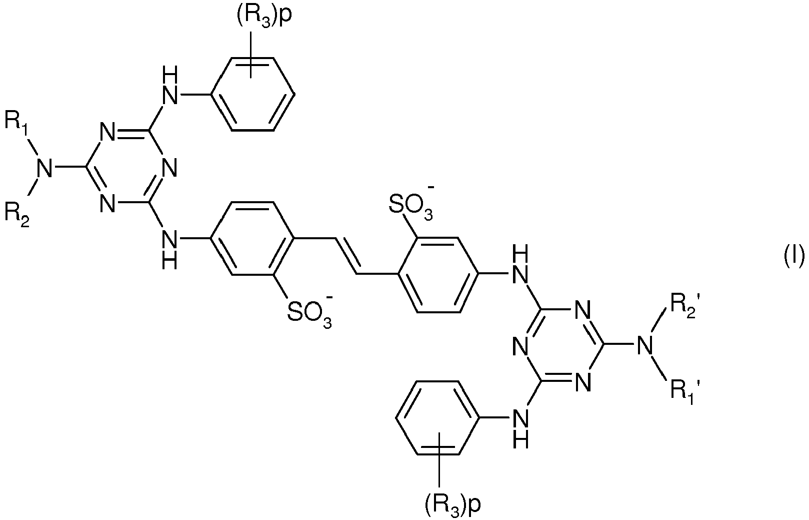 in welchem
die anionische Ladung auf dem Aufheller ausgeglichen wird durch eine kationische Ladung zusammengesetzt aus einem oder mehreren identischen oder verschiedenen Kationen ausgewählt aus der Gruppe bestehend aus Wasserstoff, Alkalimetallkation, Erdalkalimetallkation, Ammonium, Ammonium, welches mono-, di-, tri- oder tetrasubstituiert ist durch einen C₁-C₄ linearen oder verzweigten Alkylrest, Ammonium, welches mono-, di-, tri- oder tetrasubstituiert ist durch einen C₁-C₄ linearen oder verzweigten Hydroxyalkylrest, Ammonium, welches di-, tri- oder tetratsubstituiert ist durch eine Mischung aus C₁-C₄ linearen oder verzweigten Alkylrest und linearen oder verzweigten Hydroxyalkylrest oder eine Mischung besagter Verbindungen
und
R₁ und R₁' sind gleich oder verschieden, und jeder ist Wasserstoff, C₁-C₄ linear oder verzweigtes Alkyl, C₂-C₄ linear oder verzweigtes Hydroxyalkyl, CH₂CO₂⁻, CH₂CH₂CONH₂ oder CH₂CH₂CN und
R₂ und R₂' können gleich oder verschieden sein und jeder ist C₁-C₄ linear oder verzweigtes Alkyl, C₂-C₄ linear oder verzweigtes Hydroxyalkyl, CH₂CO₂⁻, CH(CO₂⁻)CH₂CO₂⁻ oder CH₂CH₂SO₃⁻,
R₃ bedeutet Wasserstoff, -CO₂⁻ oder -SO₃⁻ und
p ist 0, 1 oder 2,
b) mindestens einen Nuancierfarbstoff der Formel (II) 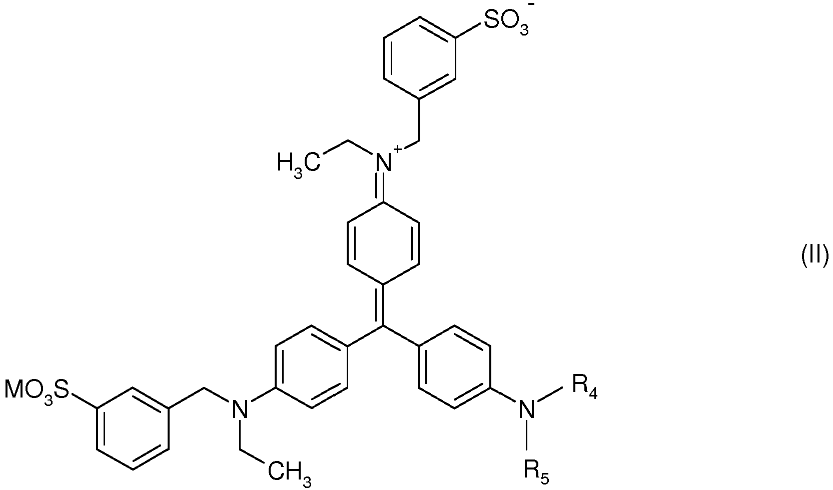 wobei in den Verbindungen der Formel (II)
R₄ bedeutet H, Methly oder Ethyl,
R₅ bedeutet para-Methoxyphenyl, Methyl oder Ethyl,
M bedeutet ein Kation ausgewählt aus der Gruppe bestehend aus Wasserstoff, Alkalimetallkation, Erdalkalimetallkation, Ammonium, welches mono-, di-, tri- oder tetratsubstituiert ist durch einen C₁-C₄ linearen oder verzweigten Hydroxyalkylrest, Ammonium, welches di-, tri- oder tetratsubstituiert ist durch eine Mischung aus C₁-C₄ linearen oder verzweigten Alkylrest und linearen oder verzweigten Hydroxyalkylrest, oder eine Mischung besagter Verbindungen,
c) optional einen oder mehrere Hilfsstoffe und
d) Wasser.

2. Verfahren gemäß Anspruch 1, wobei in den Verbindungen der Formel (I), in welchem R₃ -SO₃⁻ ist und p 1 ist, die -SO₃⁻ Gruppe in der 4-Position des Phenylrings ist.

3. Verfahren gemäß Anspruch 1, wobei in den Verbindungen der Formel (I), in welchen R₃ -SO₃⁻ ist und p 2 ist, die -SO₃⁻ Gruppen in den 2,5-Positionen des Phenylrings sind.

4. Verfahren gemäß Anspruch 1, wobei in den Verbindungen der Formel (I), in welchen R₃ -CO₂⁻ ist und p 1 ist, die -CO₂⁻ Gruppe in der 2 oder 4-Position des Phenylrings ist.

5. Verfahren gemäß mindestens einem der vorhergehenden Ansprüche , wobei in den Verbindungen der Formel (I) die anionische Ladung auf dem Aufheller ausgeglichen wird durch eine kationische Ladung zusammengesetzt aus einem oder mehreren identischen oder verschiedenen Kationen ausgewählt aus der Gruppe bestehend aus Wasserstoff, Alkalimetallkation, Erdalkalimetallkation, Ammonium, welches mono-, di-, tri- oder tetrasubstituiert ist durch einen C₁-C₄ linearen oder verzweigten Hydroxyalkylrest, Ammonium, welches di-, tri- oder tetratsubstituiert ist durch eine Mischung aus C₁-C₄ linearen oder verzweigten Alkylrest und linearen oder verzweigten Hydroxyalkylrest, oder eine Mischung besagter Verbindungen.

6. Verfahren gemäß mindestens einem der vorhergehenden Ansprüche , wobei in den Verbindungen der Formel (I) die anionische Ladung auf dem Aufheller ausgeglichen wird durch eine kationische Ladung zusammengesetzt aus einem oder mehreren identischen oder verschiedenen Kationen ausgewählt aus der Gruppe bestehend aus Li⁺, Na⁺, K⁺, Ca²⁺, Mg²⁺, Ammonium, welches mono-, di-, tri- oder tetratsubstituiert ist durch einen C₁-C₄ linearen oder verzweigten Hydroxyalkylrest, Ammonium, welches di-, tri- oder tetratsubstituiert ist durch eine Mischung aus C₁-C₄ linearen oder verzweigten Alkylrest und linearen oder verzweigten Hydroxyalkylrest, oder eine Mischung besagter Verbindungen,
R₁ und R₁' können gleich oder verschieden sein, und jeder ist Wasserstoff, Methyl, Ethyl, Propyl, α-Methylpropyl, β-Methylpropyl, β-Hydroxyethyl, β-Hydroxypropyl, CH₂CO₂⁻, CH₂CH₂CONH₂ oder CH₂CH₂CN,
R₂ und R₂' können gleich oder verschieden sein und jeder ist Methyl, Ethyl, Propyl, α-Methylpropyl, β-Methylpropyl, β-Hydroxyethyl, β-Hydroxypropyl, CH₂CO₂⁻, CH(CO₂⁻)CH₂CO₂⁻ oder CH₂CH₂SO₃⁻,
R₃ bedeutet Wasserstoff, -CO₂⁻ oder -SO₃⁻ und
p ist 0, 1 oder 2.

7. Verfahren gemäß mindestens einem der vorhergehenden Ansprüche , wobei in den Verbindungen der Formel (I) die anionische Ladung auf dem Aufheller ausgeglichen wird durch eine kationische Ladung zusammengesetzt aus einem oder mehreren identischen oder verschiedenen Kationen ausgewählt aus der Gruppe bestehend aus Na⁺, K⁺, Triethanolammonium, N-Hydroxyethyl-N,N-dimethylammonium, N-Hdyroxyethyl-N,N-diethylammonium oder Mischungen besagter Verbindungen
R₁ und R₁' können gleich oder verschieden sein, und jeder ist Wasserstoff, Ethyl, Propyl, β-Hydroxyethyl, β-Hydroxypropyl, CH₂CO₂⁻ oder CH₂CH₂CONH₂,
R₂ und R₂' können gleich oder verschieden sein und jeder ist Ethyl, Propyl, β-Hydroxyethyl, β-Hydroxypropyl, CH₂CO₂⁻, CH(CO₂⁻)CH₂CO₂⁻ oder CH₂CH₂SO₃⁻,
R₃ bedeutet Wasserstoff, -CO₂⁻ oder -SO₃⁻ und
p ist 0 oder 1.

8. Verfahren gemäß mindestens einem der vorhergehenden Ansprüche, wobei die Verbindung der Formel (I) in einer Menge von 0,001 bis 5 Gew.-%, bevorzugt in einem Bereich von 0,01 bis 3 Gew.-%, verwendet wird, die Gew.-% sind bezogen auf die Gesamtmasse des Trockenzellstoffs.

9. Verfahren gemäß mindestens einem der vorhergehenden Ansprüche, wobei in den Verbindungen der Formel (II)
R₄ bedeutet Methyl oder Ethyl,
R₅ bedeutet Methyl oder Ethyl,
M bedeutet ein Kation ausgewählt aus der Gruppe bestehend aus Li⁺, Na⁺, K⁺, ½ Ca²⁺, ½ Mg²⁺, Ammonium, welches mono-, di-, tri- oder tetratsubstituiert ist durch einen C₁-C₄ linearen oder verzweigten Hydroxyalkylrest, Ammonium, welches di-, tri- oder tetratsubstituiert ist durch eine Mischung aus C₁-C₄ linearen oder verzweigten Alkylrest und linearen oder verzweigten Hydroxyalkylrest, oder eine Mischung besagter Verbindungen.

10. Verfahren gemäß mindestens einem der vorhergehenden Ansprüche, wobei in den Verbindungen der Formel (II)
R₄ bedeutet Methyl oder Ethyl,
R₅ bedeutet Methyl oder Ethyl,
M bedeutet ein Kation ausgewählt aus der Gruppe bestehend aus Na⁺, K⁺, Triethanolammonium, N-Hydroxyethyl-N,N-dimethylammonium, N-Hydroxyethyl-N,N-diethylammonium oder Mischungen besagter Verbindungen.

11. Verfahren gemäß mindestens einem der vorhergehenden Ansprüche, wobei die Verbindung der Formel (II) in einer Menge von 0,0001 bis 0,02 Gew.-%, bevorzugt in einem Bereich von 0,0005 bis 0,01 Gew.-%, verwendet wird, die Gew.-% sind bezogen auf die Gesamtmasse des Trockenzellstoffs.

12. Verfahren gemäß mindestens einem der vorhergehenden Ansprüche, wobei die wässrige Formulierung optional einen oder mehrere Hilfsstoffe enthält, Beispiele solcher Hilfsstoffe sind zum Beispiel Frostschutzmittel, Dispersionsmittel, synthetische oder natürliche Verdicker, Trägerstoffe, Antischaummittel, Wachsemulsionen, Farbstoffe, anorganische Salze, Solubilisierungshilfsstoffe, Konservierungsmittel, Komplexierungsmittel, Biozide, Vernetzer, Pigmente oder spezielle Harze.

13. Verfahren gemäß mindestens einem der vorhergehenden Ansprüche, wobei die wässrige Formulierung hergestellt wird durch Mischen einer oder mehrerer Verbindungen der Formel (I), einer oder mehrerer Verbindungen der Formel (II) und optional einem oder mehrerer Hilfsstoffe als Feststoffe oder als vorgemischte wässrige Lösungen.

14. Verfahren gemäß mindestens einem der vorhergehenden Ansprüche, wobei in der wässrigen Lösung die Konzentration der Verbindung der Formel (I) in Wasser von 1 bis 50 Gew.-% ist, die Gew.-% basieren auf dem Gesamtgewicht der vorgemischten wässrigen Lösung enthaltend die Verbindung der Formel (I).

15. Verfahren gemäß mindestens einem der vorhergehenden Ansprüche, wobei in der wässrigen Lösung die Konzentration der Verbindung der Formel (II) in Wasser bevorzugt von 0,001 bis 30 Gew.-% ist, die Gew.-% basieren auf dem Gesamtgewicht der vorgemischten wässrigen Lösung enthaltend die Verbindung der Formel (II).

16. Verfahren gemäß mindestens einem der vorhergehenden Ansprüche, wobei der pH-Wert der wässrigen Formulierung im Bereich von 5 bis 13 ist.

## Revendications

1. Procédé de préparation de papier blanc qui comprend l'addition à la masse de pâte à papier d'une formulation aqueuse comprenant
a) au moins un azurant optique de formule (I) 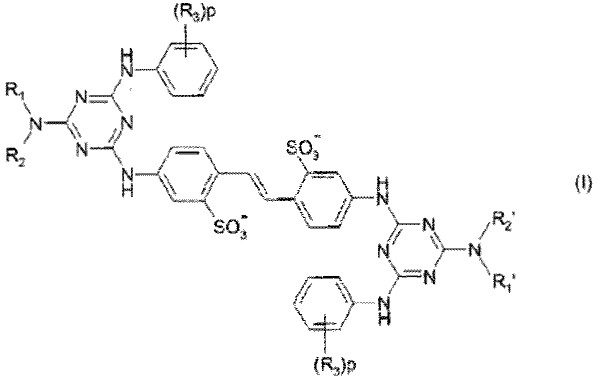 dans laquelle
la charge ionique sur l'azurant est équilibrée par une charge cationique constituée d'un ou plusieurs cations identiques ou différents choisis dans le groupe constitué de l'hydrogène, d'un cation de métal alcalin, d'un métal alcalino-terreux, d'ammonium, d'ammonium qui est mono-, di-, tri- ou tétrasubstitué par un radical alkyle linéaire ou ramifié en C₁-C₄, d'ammonium qui est mono-, di-, tri- ou tétrasubstitué par un radical hydroxyalkyle linéaire ou ramifié en C₁-C₄, d'ammonium qui est di-, tri- ou tétrasubstitué par un mélange de radical alkyle linéaire ou ramifié et de radical hydroxyalkyle linéaire ou ramifié en C₁-C₄ ou de mélanges desdits composés,
et R¹ et R² sont identiques ou différents et chacun est l'hydrogène, un groupe alkyle linéaire ou ramifié en C₁-C₄, hydroxyalkyle linéaire ou ramifié en C₂-C₄, CH₂CO₂⁻, CH₂CH₂CONH₂ ou CH₂CH₂CN, et
R₂ et R₂' peuvent être identiques ou différents, et sont chacun un groupe alkyle linéaire ou ramifié en C₁-C₄, hydroxyalkyle linéaire ou ramifié en C₂-C₄, CH₂CO₂, CH(CO₂⁻)CH₂CO₂⁻ ou CH₂CH₂SO₃⁻,
R³ représente l'hydrogène, -CO₂⁻ ou -SO₃⁻ et
p est égal à 0, 1 ou 2,
b) au moins un colorant de nuançage de formule (II) 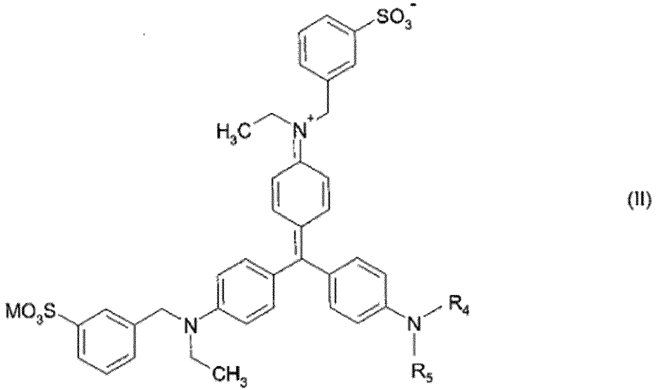 dans laquelle dans les composés de formule (II)
R₄ représente H, un groupe méthyle ou éthyle,
R₅ représente un groupe paraméthoxyphényle, méthyle ou éthyle,
M représente un cation choisi dans le groupe constitué de l'hydrogène, d'un cation de métal alcalin, d'un métal acalino-terreux, d'ammonium qui est mono-, di-, tri- ou tétrasubstitué par un radical hydroxyalkyle linéaire ou ramifié en C₁-C₄, d'ammonium qui est di-, tri- ou tétrasubstitué par un mélange de radical alkyle linéaire ou ramifié et de radical hydroxyalkyle linéaire ou ramifié en C₁-C₄ ou de mélanges desdits composés,
c) éventuellement un ou plusieurs auxiliaires et
d) de l'eau.

2. Procédé selon la revendication 1, dans lequel dans les composés de formule (I) dans laquelle R₃ est -SO₃⁻ et p est égal à 1, le groupe -SO₃⁻ est dans la position 4 du noyau phényle.

3. Procédé selon la revendication 1, dans lequel dans les composés de formule (I) dans laquelle R₃ est -SO₃⁻ et p est égal à 2, les groupes -SO₃⁻ sont dans les positions 2,5 du noyau phényle.

4. Procédé selon la revendication 1, dans lequel dans les composés de formule (I) dans laquelle R₃ est -CO₂⁻ et p est égal à 1, le groupe -CO₂⁻ est dans la position 2 ou 4 du noyau phényle.

5. Procédé selon au moins l'une des revendications précédentes, dans lequel dans les composés de formule (I) la charge anionique sur l'azurant optique est équilibrée par une charge cationique constituée d'un ou plusieurs cations identiques ou différents choisis dans le groupe constitué de l'hydrogène, d'un cation de métal alcalin, d'un métal alcalino-terreux, d'ammonium qui est mono-, di-, tri- ou tétrasubstitué par un radical hydroxyalkyle linéaire ou ramifié en C₁-C₄, d'ammonium qui est di-, tri- ou tétrasubstitué par un mélange de radical alkyle linéaire ou ramifié et de radical hydroxyalkyle linéaire ou ramifié en C₁-C₄ ou de mélanges desdits composés.

6. Procédé selon au moins l'une quelconque des revendications précédentes, dans lequel dans les composés de formule (I) la charge anionique sur l'azurant est équilibrée par une charge cationique constituée d'un ou plusieurs cations identiques ou différents choisis dans le groupe constitué de Li⁺, Na⁺, K⁺, Ca²⁺, Mg²⁺, d'ammonium qui est mono-, di-, tri- ou tétrasubstitué par un radical hydroxyalkyle linéaire ou ramifié en C₁-C₄, d'ammonium qui est di-, tri- ou tétrasubstitué par un mélange de radical alkyle linéaire ou ramifié et de radical hydroxyalkyle linéaire ou ramifié en C₁-C₄ ou de mélanges desdits composés,
R₁ et R₁^{'} peuvent être identiques ou différents, et chacun est l'hydrogène, un groupe méthyle, éthyle, propyle, α-méthylpropyle, β-méthylpropyle, β-hydroxyéthyle, β-hydroxypropyle, CH₂CO₂⁻, CH₂CH₂CONH₂ ou CH₂CH₂CN,
R² et R₂^{'} peuvent être identiques ou différents et sont chacun un groupe méthyle, éthyle, propyle, α-méthylpropyle, β-méthylpropyle, β-hydroxyéthyle, β-hydroxypropyle, CH₂CO₂⁻, CH(CO₂⁻)CH₂CO₂⁻ ou CH₂CH₂SO₃⁻,
R₃ représente l'hydrogène, -CO₂⁻ ou -SO₃⁻ et
p est égal à 0, 1 ou 2.

7. Procédé selon au moins l'une quelconque des revendications précédentes, dans lequel dans les composés de formule (I), la charge anionique sur l'azurant est équilibrée par une charge cationique constituée d'un ou plusieurs cations identiques ou différents choisis dans le groupe constitué de Na⁺, K⁺, triéthanolammonium, N-hydroxyéthyl-N,N-diméthyl-ammonium, N-hydroxyéthyl-N,N-diéthylammonium ou mélanges desdits composés,
R₁ et R₁^{'} peuvent être identiques ou différents, et chacun est l'hydrogène, un groupe éthyle, propyle, β-hydroxyéthyle, β-hydroxypropyle, CH₂CO₂⁻, ou CH₂CH₂CONH₂,
R₂ et R₂^{'} peuvent être identiques ou différents, et chacun est un groupe éthyle, propyle, β-hydroxyéthyle, -hydroxypropyle, CH₂CO₂⁻, CH(CO₂⁻)CH₂CO₂⁻ ou CH₂CH₂SO₃⁻ et
R₃ représente l'hydrogène, -CO₂⁻ ou -SO₃⁻ et
p est égal à 0 ou 1.

8. Procédé selon au moins l'une quelconque des revendications précédentes, où le composé de formule (I) est utilisé dans une quantité de 0,001 à 5 % en masse, de préférence dans l'intervalle de 0,01 à 3 % en masse, le % en masse étant basé sur la masse totale de pâte à papier sèche.

9. Procédé selon au moins l'une quelconque des revendications précédentes, dans lequel dans les composés de formule (II)
R₄ représente un groupe méthyle ou éthyle,
R₅ représente un groupe méthyle ou éthyle,
M représente un cation choisi dans le groupe constitué de Li⁺, Na⁺, K⁺, ½Ca²⁺, ½Mg²⁺, d'ammonium qui est mono-, di-, tri- ou tétrasubstitué par un radical hydroxyalkyle linéaire ou ramifié en C₁-C₄, d'ammonium qui est di-, tri- ou tétrasubstitué par un mélange de radical alkyle linéaire ou ramifié et de radical hydroxyalkyle linéaire ou ramifié en C₁-C₄ ou de mélanges desdits composés.

10. Procédé selon au moins l'une quelconque des revendications précédentes, dans lequel dans les composés de formule (II)
R₄ représente un groupe méthyle ou éthyle,
R₅ représente un groupe méthyle ou éthyle,
M représente un cation choisi dans le groupe constitué de Na⁺, K⁺, triéthanolammonium, N-hydroxyéthyl-N,N-diméthylammonium, N-hydroxyéthyl-N,N-diéthylammonium ou mélanges desdits composés.

11. Procédé selon au moins l'une quelconque des revendications précédentes, dans lequel le composé de formule (II) est utilisé dans une quantité de 0,0001 à 0,02 % en masse, de préférence dans l'intervalle de 0,0005 à 0,01 % en masse, le % en masse étant basé sur la masse totale de pâte à papier sèche.

12. Procédé selon au moins l'une quelconque des revendications précédentes, dans lequel la formulation aqueuse contient éventuellement un ou plusieurs auxiliaires, des exemples de tels auxiliaires sont par exemple des antigels, des agents dispersants, des épaississants synthétiques ou naturels, des supports, des démoussants, des émulsions de cire, des colorants, des sels inorganiques, des auxiliaires de solubilisation, des conservateurs, des agents complexant, des biocides, des agents de réticulation, des pigments ou des résines spéciales.

13. Procédé selon au moins l'une quelconque des revendications précédentes, dans lequel la formulation aqueuse est préparée par mélange d'un ou plusieurs composés de formule (I), d'un ou plusieurs composés de formule (II) et éventuellement d'un ou plusieurs auxiliaires comme solides ou comme solutions aqueuses préformées.

14. Procédé selon au moins l'une quelconque des revendications précédentes, dans lequel dans la solution aqueuse, la concentration de composé de formule (I) dans de l'eau est de 1 à 50 % en masse, le % en masse étant basé sur la masse totale de la solution aqueuse préformée contenant le composé de formule (I).

15. Procédé selon au moins l'une quelconque des revendications précédentes, dans lequel dans la solution aqueuse, la concentration de composé de formule (II) dans l'eau est de préférence de 0,001 à 30 % en masse, le pourcent en masse étant rapporté à la masse totale de la solution aqueuse préformée contenant le composé de formule (II).

16. Procédé selon au moins l'une quelconque des revendications précédentes, dans lequel la valeur de pH de la formulation aqueuse se trouve dans l'intervalle de 5 à 13.
